# EUROPEAN PATENT APPLICATION

(11) **EP 1 018 701 A2**
(43) Date of publication of application: **12.07.2000**
(21) Application number: 00300070.0
(22) Date of filing: 07.01.2000
(51) Int. Cl.: G06K 19/07

(54) **Display module in a system for signal communication between display modules and a base station**

(30) Priority: 08.01.1999 US 115440 P
(71) Applicant: Telepanel Systems Inc., Markham, Ontario L3R 5J9 (CA)
(72) Inventor: Waterhouse, Paul I., Copetown Ontario LOR 1JO (CA); Truong, Cuong Ken, Scarborough Ontario M1V 3C5 (CA); Vandierendonck, Jerry Lee, California 95066 (US); Skillen, Christopher R., Toronto Ontario M4N 3E2 (CA)
(74) Representative: Newstead, Michael John

(57) **Abstract**

A display module for a signal communicational system which provides communication between a base station and individual display modules, said display module having an oscillator providing both a frequency reference for communication between the base station and the module, and a time reference for scheduled tasks.

## Description

### FIELD OF INVENTION

This invention relates to signal communication systems of the kind which provide communication between a base station and individual display modules and a failsave display technique.

### BACKGROUND OF INVENTION

Such signal communication systems are used, for example, in retail stores where the individual display modules are modules which are located adjacent items for sale and which display the prices of the items and possibly also other information. Examples of such systems are described in U.S. Patent 4,821,291 (Stevens et al) issued April 11, 1989, U.S. Patent 4,879,756 (Stevens et al) issued November 7, 1989 and U.S. Patent 4,937,586 (Stevens et al) issued June 26, 1990. An example of a display module is described in U.S. Patent 4,603,495 (Stevens) issued August 5, 1986. The contents of these prior U.S. patents are hereby incorporated herein by reference.

U.S. Patent 4,821,291 describes a signal communication system in which the base station generates a first carrier of a first reference frequency N and a second carrier of frequency N/n derived from the first reference carrier, where n is greater than 1, with the second carrier being modulated with a digital modulating signal in accordance with digital information to be transmitted thereby. At each display module, the first carrier is received and divided by the divisor n to produce a corresponding demodulating signal of frequency N/n. The digitally modulated second carrier and the demodulating signal are received by a demodulator in the display module which demodulates the digitally modulated second carrier with the demodulating signal to generate a resulting digital information signal.

U.S. Patent 4,879,756 describes a signal communication system in which a reference carrier in the form of sequential discrete envelopes is generated at the base station, with each discrete envelope having a duration of a predetermined period. The base station also generates a base data word within the period of a respective envelope and transmits the base data word to the display modules within the period of the respective envelope. The display modules receive each reference carrier discrete envelope and a selected module is enabled for operation with the relevant base data word. A corresponding module data word is then generated in the relevant module together with a timing period which is interposed between the received base data word and the module data word to be transmitted. The length of the timing period is such that the corresponding module data word is also within the same envelope period as the received base data word, and the selected display module transmits the module data word which is received by the base station upon termination of the timing period.

U.S. Patent 4,937,586 describes a signal communication system in which the base station transmits a first reference signal of a first frequency, and transmits and receives respective data modulated signals of frequencies which are a multiple of the reference frequency. The base station includes a store loop antenna disposed with its effective loop plane horizontal. Each display module receives the first reference signal and receives and transmits a respective data modulated signal. Each display module has a first high Q ferrite-cord loop antenna coil mounted in the module body with its effective loop plane disposed in a respective first plane, and a second low Q air-cord antenna coil mounted in the module body with its effective loop plane disposed in a respective second plane orthogonal to the first plane to minimize coupling between the two antennae. The first and second antennae are disposed with their respective effective loop planes inclined at a small angle to the vertical.

Although the signal communication systems described in the above-mentioned patents are successfully operational on a commercial scale, there currently exists a need for an improved signal communication system operable between a base station and individual display modules, and it is therefore an object of this invention to provide an improved signal communication system of this kind.

### SUMMARY OF THE INVENTION

According to one aspect of the present invention, each display module has a high frequency oscillator, which may for example be a tuning fork crystal, as a frequency reference for communication between the base station and the module and as a dock to manipulate data during communication. Further frequencies may be derived from the frequency of the high frequency oscillator by multiplying in an analogue form, thereby minimizing current consumption compared to current consumption which used to be used with other ways of deriving further frequencies, which may for example require the use of a phase or frequency locked loop which would have to be active during base station/module communication. The base station to module link may be amplitude modulated or digital pulse.

### DESCRIPTION OF THE DRAWINGS

Embodiments of the invention will now be described, by way of example, with reference to the accompanying drawings, in which,
Fig. 1 is a schematic view of electrical circuitry in a display module,
Fig. 2 is an electrical circuit diagram of the first doubler in the circuit of Fig. 1,
Fig. 3 is a similar view of the second doubler,
Fig. 4 is a similar view of the pulse generator (pipper),
Fig. 5 is a similar view of the high frequency amplifier,
Fig. 6 is a similar view of the detector,
Fig. 7 is a similar view of the low frequency amplifier, and
Fig. 8 is a similar view of the bias generator.

### DESCRIPTION OF PREFERRED EMBODIMENTS

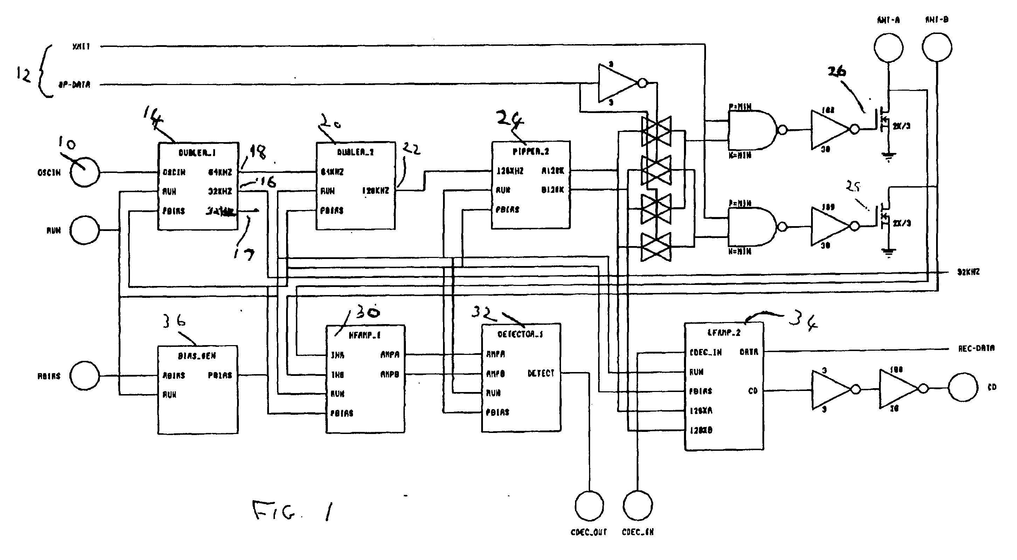

Referring to the drawing, Fig. 1 is a schematic view of electrical circuitry of a display module which, in one embodiment of the invention, provides an analogue subsystem operation. There are two analogue signal inputs, namely a first input from an oscillator (clock) 10, which is a 32768 Hz tuning fork crystal, and a receive signal 12. For simplicity, for the purpose of further discussion, the frequency of the tuning fork crystal will be assumed to be 32000 Hz. In this embodiment, the clock 10 produces a sinewave with an amplitude of 0.75 to 1.5 volts with a DC offset, which is typically about one or two volts. The output of the clock 10 passes to a first doubler 14 which produces three digital outputs. The first digital output 16 has a frequency of 32 kHz with a 25% duty cycle, and the second digital output 17 has a frequency of 32 kHz with a 75% duty cycle delayed by 180°.

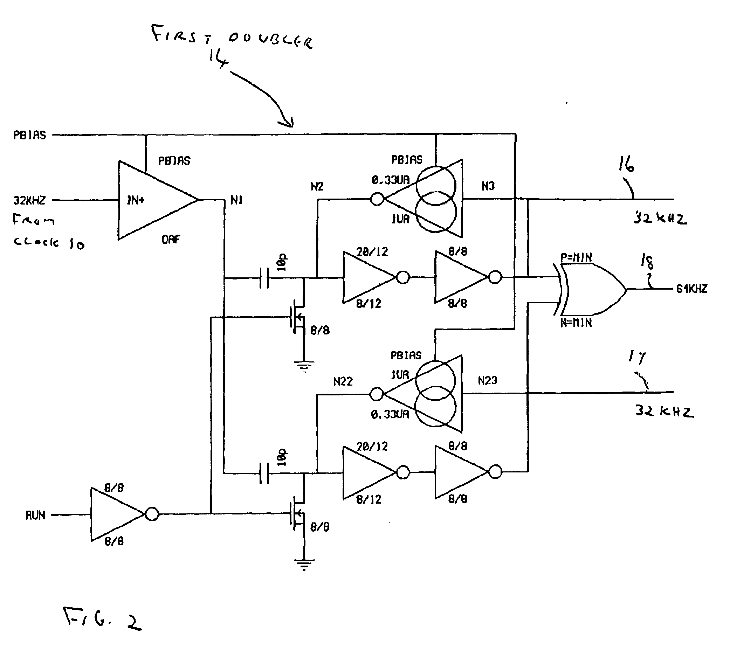

A logical exclusive OR function is performed on the first and second digital output 16, 17 to produce the third digital output 18 which has a frequency of 64 kHz with a 50% duty cycle. Referring to Fig. 2, the third digital output 18 is obtained by controlling the 25% and 75% switch points by using current feedback with a controlled ratio. The input is capacitatively coupled to the switches so that the DC offset is removed. The two 32 kHz outputs 16, 17 form a non-overlapping clock, and these feed a switch capacitor filter amplifier later in the circuit. The 64 kHz output 18 feeds the next doubler stage 20.

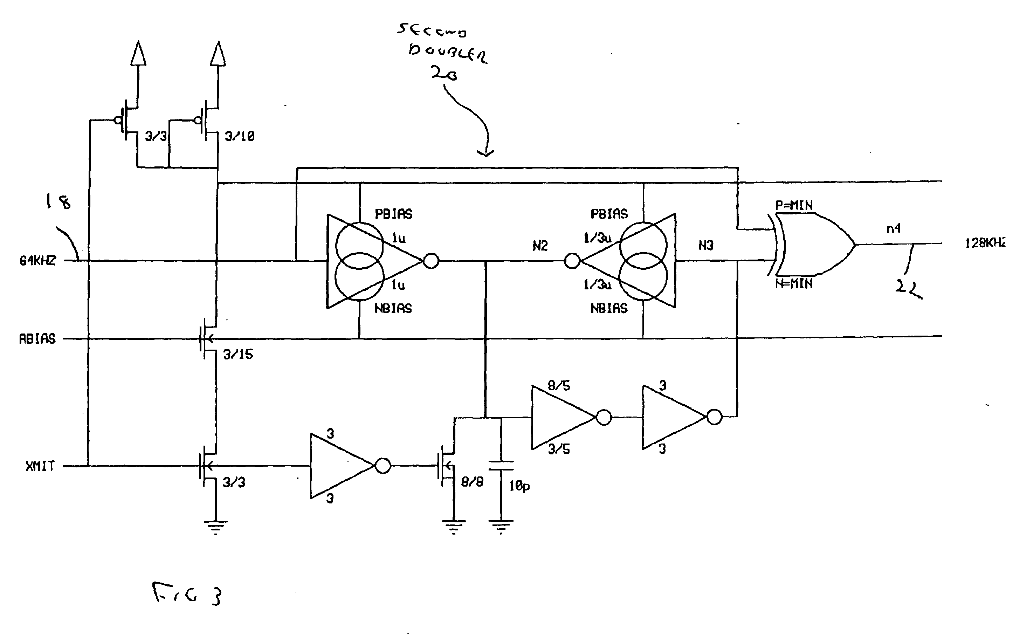

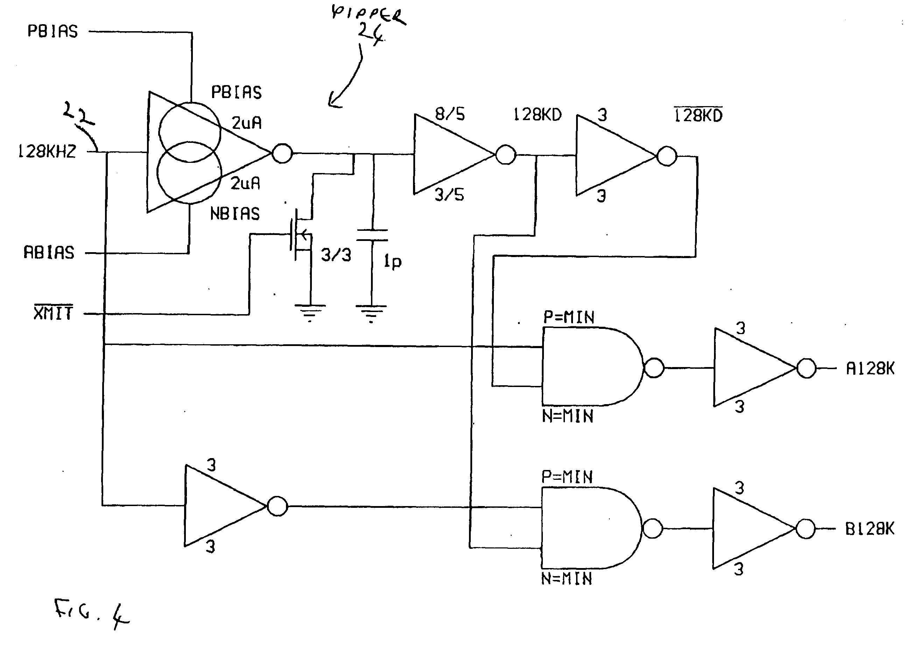

The second doubler stage 20 operates only during transmit. Referring to Fig. 3, the square wave 64 kHz output 18 is integrated to a triangle wave, which is then squared at the zero crossings to produce a second 64 kHz square wave delayed by 90°. An exclusive OR function is performed with the first 64 kHz output 18, and a 128 KHz signal 22 is produced. The 128 kHz 50% duty cycle clock signal 22 is phase modulated by the transmit data and delivered to a pulse generator (pipper) circuit 24, see Fig. 4, to drive the antenna coils. The duration of the pulses is controlled so that, as the battery voltage drops, the pulse width increases to keep the output voltage at full swing. A centre-tapped coil with push-pull open drain output drivers 26, 28 is used, as shown in Fig. 1. This develops 6 volts peak to peak on each end of a coil for a total of 12 volts peak to peak output drive.

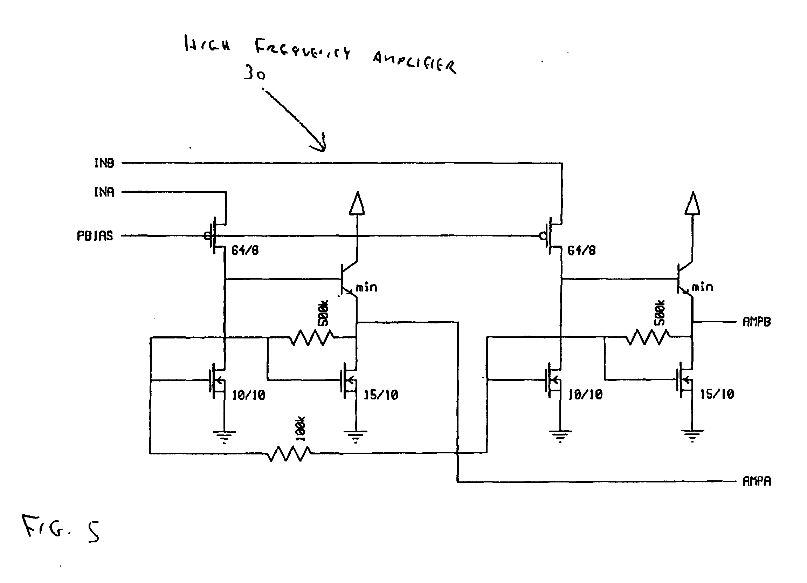

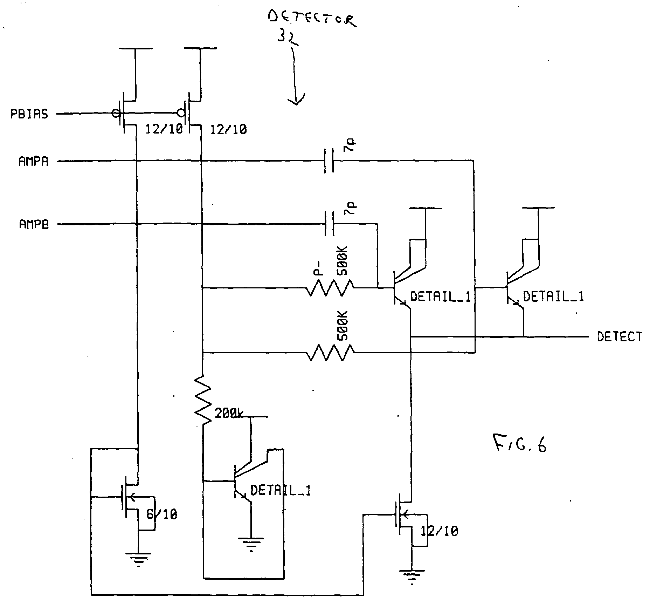

The received signals are balanced by the centre tapped antenna coils 26, 28, and each phase is amplified separately in a high frequency amplifier 30, see Fig. 5, which has a gain of approximately 10. Each amplified output is fed to a detector 32, see Fig. 6.

As shown in Fig. 6, each amplifier output is capacitatively coupled into separate emitter follower stages which function as half wave rectifiers. At low input levels, less than 50 mV, detector 30 functions as a square law detector, and the output drops as the square of the input amplitude. Above 50 mV, the circuit becomes more linear and the output is proportional to the input signal amplitude.

A problem with amplitude modulation or pulse modulation is maintaining 50% envelope switching points. A perfect amplitude modulation detector would produce an output when the input envelope is greater than 50% of the peak envelope, and no output if below. Limited band width of the antenna coil limits the attack and decay speeds of the signal envelope. If the switch points change, then the output duty cycle will change and the modulated one may be interpreted as a zero. Limiting or clipping of the receive signal by the input amplifier tends to move the envelope switch points, so it is important to limit the gain and maximize the output capability of the amplifier. By limiting the gain of the amplifier to 10, receive signals up to 200 mV can be handled without distortion.

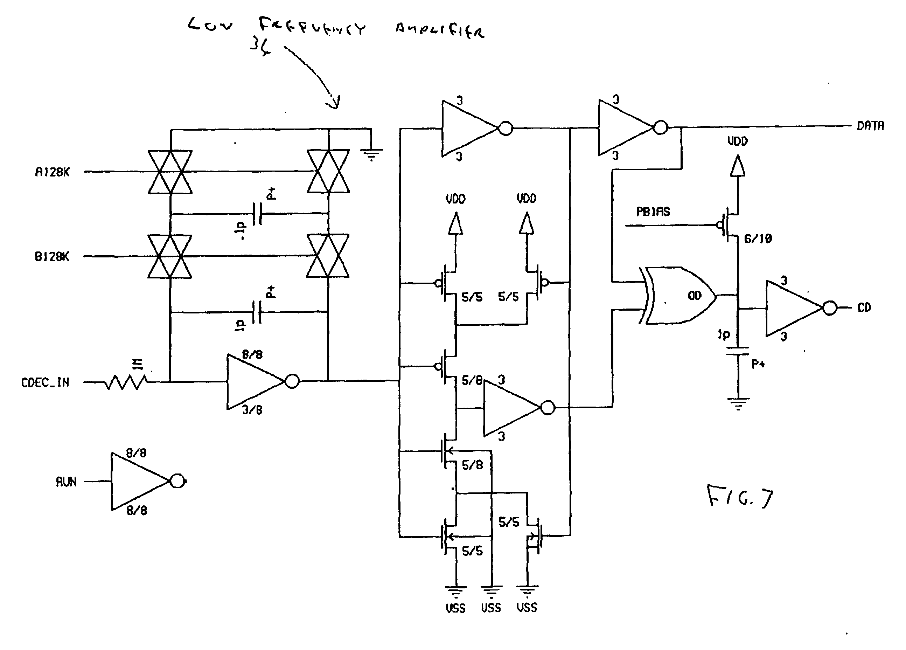

The output of the detector 32 is coupled through an external capacitor to a switched capacitor amplifier 34, see Fig. 7, which has a gain of approximately 100. A modulation code which has an average duty cycle of 50% is used so that the system automatically switches at 50% of the modulation envelope even if the signal has been distorted before detection. To detect the presence of a receive signal, the output of the low frequency amplifier is fed into a window discriminator. If the signal is greater than 500 mV, then a carrier detect condition is asserted. A second output indicated zero crossings. Normally, the data output is more sensitive than the carrier detect output, so that false data is not normally decoded.

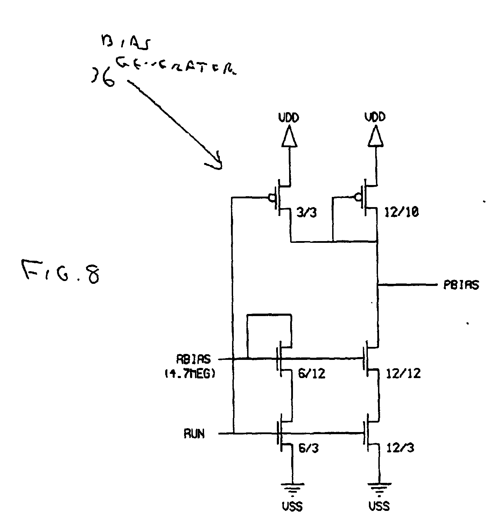

As shown in Fig. 1, a bias generator 36 provides the necessary bias to various circuit components. The bias generator 36 is shown in more detail in Fig. 8.

It is possible to increase transmit power considerably compared to that obtainable with the signal communication system described in the prior U.S. patents, for example an increase by a factor of five has been obtained. This is facilitated by use of a centre tapped antenna coil, lower inductance coil and a more efficient driver circuit.

According to other aspects of the invention, the Compare instruction is used to allow the system to check the contents of each module and get back a valid or invalid single bit response, which may be referred to as a chirp. A module contents checksum may be added to allow the system to verify the entire contents of a module with a single Compare instruction.

The length and time duration of the Yes/No return message (chirp) is variable and can be selected depending on the reliability of communications. If communications are unreliable, a longer return Yes/No message can be selected. The chirp response may be a 32-bit or 128-bit pseudo random number having flat spectral response, which gives the lowest cross correlation with noise. The Yes and No answers are orthogonal to one another to maximize their discrimination in detection.

It is possible to send data to the modules in such a manner that it is not displayed on receipt, but instead is stored in the memory until such time as a command is transmitted to all modules (hereinafter referred to as a Global Flip Command) to display the stored data. To implement this function, two independent databanks (hereinafter referred to as the Primary Data Bank and the Secondary Data Bank) are implemented in the module, with a command being transmitted from the base station transceiver instructing all modules in the store which of the databanks is to be displayed.

Possible uses for the above function are:
(a) When the displayed price on a plurality of modules needs to be updated simultaneously at a specific time, the new prices can be pre-loaded into the Secondary Data Bank of the modules well in advance of the change, and a Single Global Flip Command broadcast at the desired time which would cause all affected modules to instantaneously switch their display to the updated price.
(b) If a store introduces a limited-time promotional discount which applies to a group of products, the discounted price can be pre-loaded ahead of time into the Secondary Data Bank of the relevant modules. A first Global Flip Command is sent when the special discount period begins. Since the original prices are still stored in the Primary Data Bank of the modules concerned, there is no need to re-load the original non-discounted prices, and a Single Global Flip Command will cause the modules concerned to revert back to displaying the original non-discounted price, which is still stored in the Primary Data Bank.

It is possible to program a time limit on the Global Flip. This time limit is transmitted with the Global Flip Command to all modules to cause the modules to flip back to displaying the Primary Data Bank once the pre-programmed time delay has elapsed. This can be implemented by using a count-down timer/counter register in the microprocessor code of the module. This timer/counter is pre-set when the Time-Limit Global Flip Command is sent to the value of the time limit, and from that moment on it decreases the value of the register once every pre-defined time unit, such as a clock cycle, until it reaches zero, at which point it causes the module display to revert back to displaying the Primary Data Bank values.

Possible uses for this function are:
a) As in (b) above, when the duration of the limited-time promotional discount period is known in advance as is of a short duration, for example three hours or less, this duration may be programmed as part of the Time-Limited Global Flip Command to cause the modules concerned to revert back to the non-discounted price at the end of the promotion period without any further interface between the base station transceiver and the modules.
b) During non-business hours of a store, when maintenance staff are required to change the location of certain products on the shelves or the number of items of a certain product being displayed, (known as "facing"), data showing the intended new location of each module and its corresponding product (known as a "planogram") may be sent to all modules. This can be done while the store is still operating during business hours by using the non-displayed Secondary Data Bank. When the store closes, a Time-Limited Global Flip Command can be sent to all modules to cause them to immediately replace the price display with planogram data. Once the time allotted for the re-arrangement of the shelf products is finished, all modules will automatically and simultaneously revert to displaying the price data which is still stored in each modules Primary Data Bank.

Other possible embodiments of the invention will be readily apparent to a person skilled in the art from the foregoing description.

## Claims

1. A display module for a signal communicational system which provides communication between a base station and individual display modules, said display module having an oscillator providing both a frequency reference for communication between the base station and the module, and a time reference for scheduled tasks.

2. A display module according to claim 1 wherein further frequencies are derived from the frequency of the oscillator by multiplying in analogue form.

3. A display module according to claim 1 wherein a display Global Flip is scheduled at a specified time using a timer/counter and Primary and Secondary Data banks in the microprocessor of the module.

4. A display module according to claim 1 wherein the contents of Primary and Secondary Data banks, timer/counter, and other registers in the microprocessor are verified using a Compare command and a Yes/No return message.

5. A display module according to claim 1 wherein the time duration of Yes/No return messages is variable and can be selected such as to increase the reliability of the communication.
